# FASCICULE DE BREVET EUROPEEN

(11) **EP 1 275 321 B1**
(45) Date de publication et mention de la délivrance du brevet: **22.11.2006**
(21) Numéro de dépôt: 02291750.4
(22) Date de dépôt: 11.07.2002
(51) Int. Cl.: A45D 40/00

(54) **Article, notamment cosmétique, et son procédé de fabrication**
Kosmetischer Artikel und dessen Herstellungsverfahren
Cosmetic article and method of manufacturing the same

(30) Priorité: 11.07.2001 FR 0109217
(43) Date de publication de la demande: 15.01.2003
(73) Titulaire: L'ORÉAL, 75008 Paris (FR)
(72) Inventeur: Thiebaut, Laure, 92110 Clichy (FR)
(74) Mandataire: Tanty, François

(56) Documents cités:
- EP-A- 0 707 955
- FR-A- 2 796 329

## Description

La présente invention concerne l'habillage d'articles divers, notamment cosmétiques.

L'invention vise notamment à permettre la réalisation d'articles attractifs sur le plan esthétique.

Un article selon le préambule de la revendication 1 est connu par EP-A-0707955.

L'invention a ainsi pour objet un nouvel article, comportant un corps creux déformé à chaud ou à froid, réalisé dans un composite comprenant un support déformable à chaud ou à froid, **caractérisé en ce que** ce support est doublé d'un revêtement extensible comportant un tissu, un tricot ou un non-tissé, fixé, notamment collé sur le support, ledit corps présente une dimension axiale supérieure ou égale, voire strictement supérieure, à sa plus grande dimension transversale.

Le corps creux peut être thermoformé. Le support peut comporter une couche de mousse au contact du revêtement.

De manière surprenante, la demanderesse a constaté qu'il était possible de conférer la géométrie précitée audit corps creux, alors que l'on aurait pu craindre, notamment, un déchirement du revêtement extensible.

La mousse précitée peut être à cellules fermées, notamment en polyoléfine, par exemple en polyéthylène réticulé.

Dans une réalisation particulière, le revêtement extensible comporte un tissu extensible, notamment un tissu en Lycra^{®}, de couleur unie ou comportant des fils de couleurs différentes. L'extension du revêtement lors du formage du composite permet de créer des stries particulièrement esthétiques.

Le corps creux peut être par exemple emmanché dans un cache permettant de masquer son bord libre. Un tel cache peut être constitué par exemple par une bague ou par le rebord d'un insert partiellement engagé dans le corps creux. Le corps creux peut être muni d'un capuchon de fermeture, ce dernier étant par exemple apte à coopérer avec l'ouverture d'un mécanisme de distribution d'un produit en bâtonnet. Le capuchon de fermeture peut être fixé à une extrémité de l'insert située à l'intérieur du corps creux.

Le corps creux peut constituer un élément d'habillage d'un dispositif de conditionnement et de distribution d'un produit pour les lèvres. Le corps creux peut également servir d'élément d'habillage pour une capsule de fermeture d'un récipient, voire contenir un produit.

Le support peut être recouvert du côté opposé au revêtement par au moins une couche d'une matière thermoformable, cette matière pouvant être par exemple une polyoléfine, par exemple du polyéthylène. La couche de matière thermoformable peut recouvrir au moins partiellement une tranche du support.

L'invention a encore pour objet, selon un autre de ses aspects, un dispositif de conditionnement et de distribution d'un produit pour les lèvres, caractérisé par le fait qu'il comporte au moins un élément d'habillage constitué par un corps creux tel que défini plus haut.

L'invention a encore pour objet une capsule de fermeture comportant un élément d'habillage constitué par un corps creux tel que défini plus haut.

L'invention a encore pour objet un pot de conditionnement comportant un élément d'habillage constitué par un corps creux tel que défini plus haut.

L'invention a encore pour objet un récipient formé au moins partiellement par un corps creux tel que défini plus haut.

Dans le cas d'un dispositif de conditionnement et de distribution d'un produit pour les lèvres ou d'un vernis à ongles, le dispositif peut comporter deux éléments d'habillage sensiblement identiques, l'un pour le capot ou la capsule de fermeture et l'autre pour le mécanisme distributeur ou le récipient.

L'invention a encore pour objet, selon un autre de ses aspects, un procédé de fabrication d'un article, pouvant se caractériser par le fait qu'il comporte l'étape de déformation, notamment à chaud, d'une plaque d'un composite comportant un support, notamment une couche de mousse, doublé d'un revêtement extensible comportant un tissu, un tricot ou un non-tissé, adhérent au support, de manière à obtenir un corps creux dont la dimension axiale est supérieure ou égale, voire strictement supérieure, à sa plus grande dimension transversale. Le revêtement est situé du côté extérieur du corps creux.

Un tel procédé peut également comporter l'étape consistant à insérer à force la basé du corps creux dans un cache, de manière à assurer le maintien du cache uniquement grâce au serrage dudit corps dans le cache. On évite ainsi l'utilisation de colle et l'on simplifie la fabrication.

Le procédé peut encore comporter l'étape consistant à choisir le revêtement de manière à obtenir un effet esthétique prédéfini sur le corps après déformation du support, compte tenu de l'extension du revêtement lors de la transformation du composite. Des effets esthétiques particulièrement attractifs peuvent être obtenus lorsque le revêtement est en tissu élastomère, notamment en Lycra^{®}.

La déformation du support peut s'accompagner d'une compression de ce dernier.

L'invention a encore pour objet un article comportant :
un corps creux ayant une dimension maximale transversale et une dimension axiale qui n'est pas inférieure à la dimension maximale transversale, le corps creux étant réalisé au moins partiellement à partir d'un matériau composite comportant une couche déformable et un revêtement extensible comportant un tissu, un tricot ou un non-tissé, fixé à la couche déformable. La couche déformable peut comporter une première face sur laquelle est fixé le revêtement extensible et une deuxième face opposée à la première. L'article peut comporter au moins une couche d'un matériau thermoformable fixé à la deuxième face, notamment une polyoléfine.

L'invention a encore pour objet un article comportant :
un corps creux comportant une couche déformable et un revêtement extensible fixé à la couche déformable et un produit cosmétique associé au corps creux. Ce dernier peut avoir été déformé à chaud ou à froid. La couche déformable peut comporter une mousse et le revêtement extensible un textile tel que le Lycra^{®}, par exemple.

L'invention a encore pour objet un procédé de fabrication d'un article, comportant :
- fournir un élément en matériau composite comportant une couche déformable et un revêtement extensible fixé à la couche déformable,
- déformer l'élément en matériau composite de manière à obtenir un corps creux, et
- associer un produit cosmétique au corps creux.

L'invention sera mieux comprise à la lecture de la description détaillée qui va suivre, d'exemples de mise en oeuvre non limitatifs, et à l'examen du dessin annexé, sur lequel :
- la figure 1 est une vue schématique, en perspective, d'un étui de rouge à lèvres comportant deux éléments d'habillage,
- la figure 2 est une coupe axiale schématique du capot de fermeture de l'étui de la figure 1,
- la figure 3 représente de manière schématique le composite avant thermoformage,
- la figure 4 représente de manière schématique le composite après thermoformage,
- la figure 5 représente de manière schématique un cache sur lequel peut être fixé le corps creux obtenu par thermoformage et découpe du composite de la figure 3,
- la figure 6 est une coupe axiale schématique d'une capsule de fermeture réalisée conformément à l'invention,
- la figure 7 est une coupe axiale schématique d'un pot de conditionnement réalisé conformément à l'invention,
- la figure 8 est une variante de réalisation du pot de la figure 7,
- la figure 9 représente de manière schématique une variante de composite avant thermoformage,
- les figures 10 et 11 sont des coupes axiales schématiques d'exemples de capots de fermeture réalisés avec le composite de la figure 9, et
- les figures 12 et 13 sont des coupes axiales schématiques d'exemples de pots de conditionnement réalisés à l'aide du composite de la figure 9.

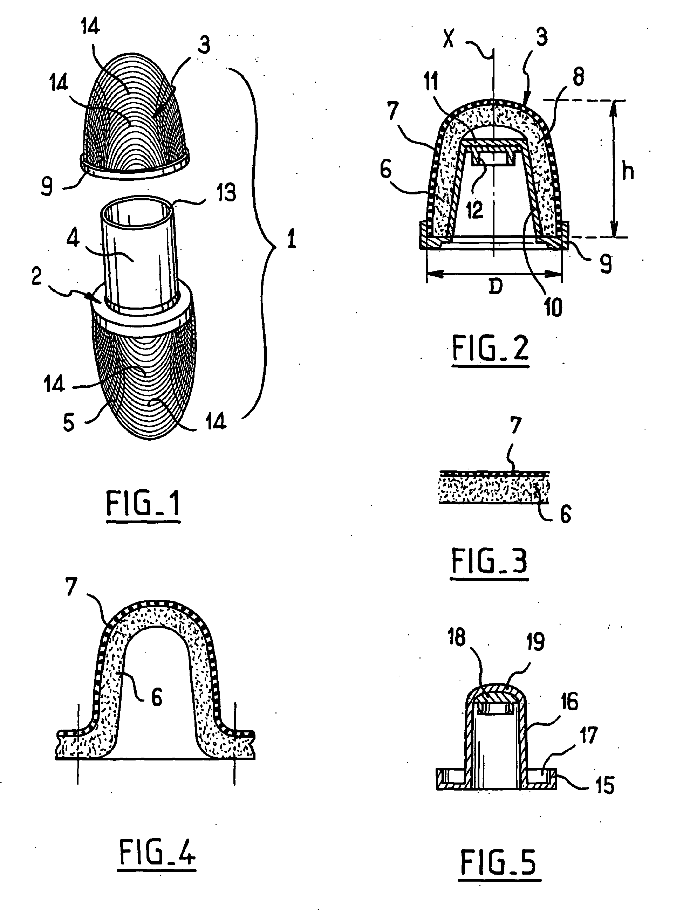

On a représenté sur la figure 1 un étui de rouge à lèvres 1 comportant un mécanisme distributeur 2 et un capot de fermeture 3.

Le mécanisme distributeur 2 comporte une partie de base 5 et une virole 4 pouvant tourner par rapport à la partie de base 5, pour provoquer le déplacement vers le haut ou vers le bas d'une cupule porte-raisin, cette dernière n'apparaissant pas sur la figure 1.

La partie de base 5 et le capot de fermeture 3 sont habillés chacun au moyen d'un corps creux 11 qui est réalisé dans l'exemple considéré avec un composite comportant une couche de mousse relativement rigide 6 doublée d'un revêtement extensible 7. Ce dernier est constitué dans l'exemple décrit par un tissu de Lycra^{®} mais on ne sort pas du cadre de la présente invention en utilisant d'autres types de revêtement, par exemple un non-tissé extensible. Dans l'exemple décrit, l'épaisseur initiale de la couche de mousse 6, de densité supérieure à 50 kg/m², par exemple égale à 70 kg/m², est de l'ordre de 5 mm. La mousse 6 est dans l'exemple considéré en polyéthylène réticulé.

Pour réaliser le corps creux, dans l'exemple décrit, on forme par thermocompression, à chaud, une plaque du composite 6, 7, de manière à lui donner la forme en doigt de gant souhaitée, représentée sur la figure 4. La forme est symétrique de révolution dans l'exemple considéré. On a fait apparaître en trait discontinu sur la figure 4 la ligne de découpe du composite après son thermoformage. L'extrémité ouverte du corps creux est ensuite insérée à force, tout en étant comprimée radialement, dans un cache 9, constitué par une bague métallique dans l'exemple décrit. La dimension axiale ou hauteur h est supérieure ou égale à la plus grande dimension transversale ou diamètre extérieur D du corps creux, comme on peut le voir sur la figure 2. La hauteur h du corps 11 est supérieure à 2,5 cm et son plus grand diamètre inférieur à 2,5 cm, dans l'exemple considéré.

Une colle peut éventuellement être appliquée au niveau de la surface de contact du corps creux 11 et du cache 9, mais dans certains cas le seul serrage du corps creux 11 dans le cache 9 pourra suffire à assurer le maintien du cache 9 sur le corps creux 11.

Dans l'exemple de la figure 2, un insert 10 constitué par un tronc de cône fermé à son sommet est inséré dans le corps creux avant la fixation du cache 9. Un capuchon 12 est fixé dans le fond de l'insert 10. Ce capuchon 12 comporte une lèvre annulaire apte à s'engager avec friction dans l'ouverture 13 du mécanisme distributeur, pour assurer le maintien du capot 3 sur celui-ci en l'absence d'utilisation.

On remarquera à l'examen de la figure 1 que la déformation du composite 6, 7 provoque l'apparition sur le revêtement 7 de stries 14 qui contribuent à l'esthétique de l'étui.

Le corps creux 11 peut également être fixé sur un élément qui comporte un cache et un insert réalisés d'un seul tenant, tel que celui représenté à la figure 5. Cet élément comporte un rebord 15 formant cache et une cheminée centrale 16 servant d'insert, fermée à son extrémité supérieure par une paroi arrondie 19. Le rebord 15 et la cheminée 16 ménagent entre eux une gorge 17 pouvant recevoir le bord libre du corps creux 11. Un capuchon 18 dont la face supérieure est bombée est fixé contre la paroi arrondie 19, dans la cheminée 16. La paroi arrondie 19 peut venir au contact de la région supérieure de la face intérieure du corps creux 11.

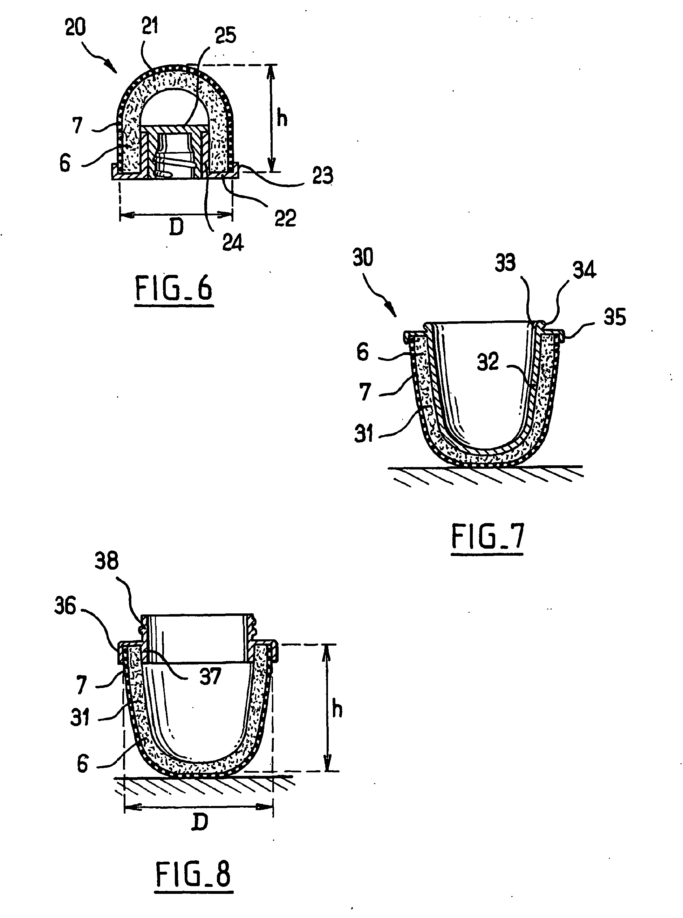

L'invention n'est pas limitée à la réalisation d'un habillage d'étui de rouge à lèvres et l'on peut notamment réaliser en mettant en oeuvre l'invention une capsule de fermeture telle que la capsule 20 représentée à la figure 6, destinée à se visser sur le col d'un récipient. Cette capsule 20 comporte un élément d'habillage formé par un corps creux 21 en composite 6, 7, à l'instar du capot 3 décrit précédemment. Le corps creux 21 est engagé dans un cache 22 comportant un rebord périphérique 23 et une cheminée intérieure 24, laquelle reçoit un bouchon 25 fileté intérieurement, agencé pour se visser sur le col d'un récipient, non représenté. On remarquera que la dimension axiale h du corps creux 21 est supérieure à son plus grand diamètre D.

On peut encore réaliser un élément d'habillage d'un récipient, tel que par exemple le récipient 30 représenté à la figure 7. Ce récipient comporte un élément d'habillage constitué par un corps creux 31 formé d'un composite 6, 7 qui a été thermocomprimé. Le récipient comporte également une pièce intérieure 32 constituant le réservoir proprement dit, conformée pour épouser la forme intérieure du corps creux 31, et présentant en partie supérieure d'une part une lèvre annulaire 33 pourvue d'un godron 34 à sa périphérie, pour permettre l'encliquetage d'un couvercle de fermeture, et d'autre part un rebord 35 dirigé vers le bas, destiné à cacher le bord supérieur du corps creux 31. On remarquera que ce dernier présente un fond plat, de manière à permettre le maintien du pot sur une surface plane, comme illustré.

Le corps creux 31 peut encore constituer lui-même le réservoir, comme illustré à la figure 8, étant reçu en partie supérieure dans une gorge d'une pièce 38 servant au montage d'un couvercle. La gorge 38 est formée entre un rebord 36 et une jupe intérieure 37. Cette dernière est munie d'un filetage 38 permettant le vissage du couvercle. Comme dans les exemples de réalisation précédents, la hauteur h du corps creux 31 est supérieure à son plus grand diamètre D.

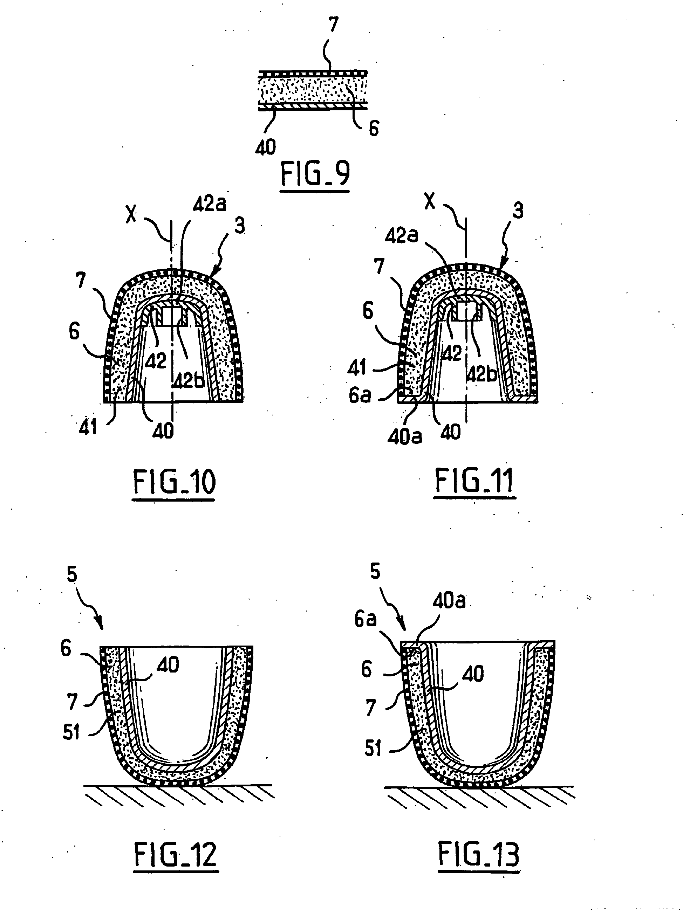

Une variante de l'invention est représentée sur les figures 10 à 13. Cette variante de réalisation utilise un composite représenté sur la figure 9 comportant une couche de mousse 6 recouverte d'un côté d'un revêtement extensible 7, et de l'autre côté d'une couche d'une matière thermoformable relativement rigide 40. Cette couche 40 peut être par exemple une couche d'une polyoléfine, par exemple du polyéthylène. Les couches 7 et 40 peuvent être collées toutes deux lors de la fabrication du composite et avant sa déformation sur la couche de mousse 6, par exemple simultanément. L'épaisseur de la couche 40 peut être inférieure à l'épaisseur de la couche de mousse 6.

Par thermoformage du composite, et déformation simultanée des différentes couches qui le composent, on peut obtenir par exemple comme illustré sur les figures 10 et 11 un corps creux 41 formant un capot de fermeture 3 et dans lequel il n'est pas introduit d'insert 10. La couche 40 participe à la rigidification de l'ensemble. Un capuchon 42 peut être fixé sur la couche 40, par exemple par collage. Ce capuchon 42 peut comporter par exemple une paroi 42a configurée pour épouser la forme du fond du corps creux 41, et une jupe d'étanchéité 42b. La bague métallique constituée par le cache 9 de la figure 2 peut être supprimée. Dans l'exemple de réalisation de la figure 11, la couche 40 peut comporter une extrémité 40a déformée de manière à recouvrir la tranche 6a de la couche de mousse 6. Cette extrémité déformée 40a peut servir de cache et améliorer l'esthétique du corps creux.

De même, comme représenté aux figures 12 et 13, on peut utiliser le composite de la figure 9 pour former le corps creux 51 qui constitue la partie de base 5. La couche 40 peut permettre de remplacer la pièce intérieure 32 de l'exemple de réalisation de la figure 7. Dans l'exemple de la figure 13, la couche 40 a été déformée à son extrémité 40a de manière à recouvrir la tranche 6a de la couche de mousse 6.

Bien entendu, l'invention n'est pas limitée aux exemples qui viennent d'être décrits. En particulier, on peut remplacer le revêtement en Lycra^{®} par d'autres revêtements extensibles, notamment d'autres revêtements tissés ou tricotés, ou par des revêtements en non-tissé.

## Revendications

1. Article (1) comportant un corps creux (11 ; 21 ; 31 ; 41 ; 51) déformé à chaud ou à froid, réalisé dans un composite comprenant un support (6) déformable à chaud ou à froid **caractérisé en ce que** ce support est doublé d'un revêtement extensible (7) comportant un tissu, un tricot ou un non-tissé, fixé, notamment collé, sur le support, ledit corps (11 ; 21 ; 31) présentant une hauteur (h) supérieure ou égale à sa plus grande dimension transversale (D).

2. Article selon la revendication 1, **caractérisé par le fait que** le support est thermoformé.

3. Article selon la revendication 1 ou 2, **caractérisé par le fait que** le support comprend une couche de mousse (6) au contact du revêtement (7).

4. Article selon l'une quelconque des revendications précédentes, **caractérisé par le fait que** la hauteur (h) est strictement supérieure à la plus grande dimension transversale (D).

5. Article selon la revendication 4, **caractérisé par le fait que** le tissu est en Lycra^{®}.

6. Article selon l'une des revendications 4 et 5, **caractérisé par le fait que** le tissu est de couleur unie.

7. Article selon l'une des revendications 4 et 5, **caractérisé par le fait que** le tissu comporte des fils de couleurs différentes.

8. Article selon l'une quelconque des revendications précédentes, **caractérisé par le fait que** le corps creux (11) est emmanché dans un cache.

9. Article selon la revendication 8, **caractérisé par le fait que** le cache est constitué par une bague (9) ou par le rebord (15 ; 23 ; 35 ; 36) d'une pièce partiellement engagée dans le corps creux.

10. Article selon la revendication précédente, **caractérisé par le fait qu'**un insert (10 ; 16 ; 24) s'étend à l'intérieur du corps creux.

11. Article selon l'une quelconque des revendications précédentes, **caractérisé par le fait que** le corps creux (11 ; 21 ; 41) est muni d'un capuchon de fermeture (12 ; 18 ; 25 ; 42).

12. Article selon les revendications 10 et 11, **caractérisé par le fait que** le capuchon de fermeture (12 ; 18 ; 25) est fixé à une extrémité de l'insert (10 ; 16 ; 24) située à l'intérieur du corps creux.

13. Article selon la revendication précédente, **caractérisé par le fait que** le capuchon de fermeture (12) est apte à coopérer avec une ouverture (13) d'un mécanisme distributeur.

14. Article selon l'une quelconque des revendications précédentes, **caractérisé par le fait que** le corps creux (11) constitue un élément d'habillage d'un dispositif de conditionnement et de distribution d'un produit pour les lèvres.

15. Article selon la revendication 14, **caractérisé par le fait qu'**il comporte deux éléments d'habillage sensiblement identiques, l'un pour le capot de fermeture, et l'autre pour le corps du dispositif.

16. Article selon la revendication 14 ou 15, **caractérisé par le fait que** la hauteur (h) du corps creux (11) est supérieure ou égale à 2,5 cm et son plus grand diamètre (D), mesuré à sa base, inférieur ou égal à 2,5 cm.

17. Article selon l'une quelconque des revendications 1 à 13, **caractérisé par le fait que** le corps creux (21) constitue un élément d'habillage pour une capsule de fermeture (20) d'un récipient.

18. Article selon l'une quelconque des revendications 1 à 13, **caractérisé par le fait que** le corps creux (31) constitue une paroi d'un récipient ou un élément d'habillage d'un récipient.

19. Article selon l'une quelconque des revendications précédentes, **caractérisé par le fait que** le support comporte une couche de mousse (6) à cellules fermées.

20. Article selon l'une quelconque des revendications précédentes, **caractérisé par le fait que** le support comporte une couche de mousse (6) réalisée dans une polyoléfine, notamment du polyéthylène de densité supérieure à 50 kg/m².

21. Article selon l'une quelconque des revendications précédentes, **caractérisé par le fait que** le support est recouvert du côté opposé au revêtement par au moins une couche (40) d'une matière thermoformable.

22. Article selon la revendication 21, **caractérisé par le fait que** la matière thermoformable est une polyoléfine.

23. Article selon la revendication 22, **caractérisé par le fait que** la matière thermoformable est du polyéthylène.

24. Article selon l'une des revendications 21 à 23, **caractérisé par le fait que** la couche (40) de matière thermoformable recouvre au moins partiellement une tranche (6a) du support (6).

25. Dispositif de conditionnement et de distribution d'un produit pour les lèvres, **caractérisé par le fait qu'**il comporte au moins un corps creux tel que défini dans l'une quelconque des revendications 1 à 24.

26. Procédé de fabrication d'un article, **caractérisé par le fait qu'**il comporte l'étape de déformation, notamment à chaud, d'une plaque d'un composite (6, 7 ; 6, 7, 40) comportant un support, notamment une couche de mousse (6), doublé d'un revêtement extensible (7) comportant un tissu, un tricot ou un non-tissé, adhérant au support, de manière à obtenir un corps creux dont la hauteur (h) est supérieure ou égale à la plus grande dimension transversale (D).

27. Procédé selon la revendication 26, **caractérisé par le fait que** la hauteur (h) est strictement supérieure à la plus grande dimension transversale (D).

28. Procédé selon la revendication 26 ou 27, **caractérisé par le fait qu'**il comprend l'étape consistant à insérer la base du corps creux dans un cache.

29. Procédé selon l'une quelconque des revendications 26 à 28, **caractérisé par le fait qu'**il comporte l'étape consistant à choisir le revêtement de manière à obtenir un effet esthétique à base de stries (14) sur le corps après déformation, compte tenu de l'extension du revêtement lors de la transformation du composite.

30. Procédé selon l'une quelconque des revendications 26 à 29, **caractérisé par le fait que** la déformation du support s'accompagne d'une compression de ce dernier.

## Claims

1. An article (1) comprising a hot- or cold-deformed hollow body (11; 21; 31) made of a composite material comprising a hot- or cold-deformable backing (6) **characterized by** the fact that the backing is lined with a stretchable covering (7) comprising a woven cloth, a knitted fabrics or a non-woven, fixed onto the backing, in particular stuck onto the backing, said body (11; 21; 31) presenting an axial dimension (h) that is not less than a maximum transverse dimension (D).

2. An article according to claim 1, **characterized by** the fact that the backing is thermoformed.

3. An article according to claim 1 or claim 2, **characterized by** the fact that the backing comprises a foam layer (6) that is in contact with the covering (7).

4. An article according to any preceding claim, **characterized by** the fact that the axial dimension (h) is greater than the maximum transverse dimension (D).

5. An article according to claim 4, **characterized by** the fact the fabric is made of Lycra^{®}.

6. An article according to claim 4 or claim 5, **characterized by** the fact that the fabric is of uniform color.

7. An article according to claim 4 or claim 5, **characterized by** the fact that the fabric includes threads of various colors.

8. An article according to any preceding claim, **characterized by** the fact that the hollow body (11) is engaged in a mask.

9. An article according to claim 8, **characterized by** the fact that the mask is constituted by a ring (9) or by the rim (15; 23; 35; 36) of a part that is partially engaged in the hollow body.

10. An article according to the preceding claim, **characterized by** the fact that an insert (10; 16; 24) extends inside the hollow body.

11. An article according to the preceding claim, **characterized by** the fact that the hollow body (11; 21; 41) is provided with a closure cap (12; 18; 25; 42).

12. An article according to claim 10 or claim 11, **characterized by** the fact that the closure cap (12; 18; 25) is fixed to an end of the insert (10; 16; 24) situated inside the hollow body.

13. An article according to the preceding claim, **characterized by** the fact that the closure cap (12) is suitable for co-operating with an opening (13) of a dispenser mechanism.

14. An article according to any preceding claim, **characterized by** the fact that the hollow body (11) constitutes a shell element for covering a device for packaging and dispensing a product for the lips.

15. An article according to claim 14, **characterized by** the fact that it includes two substantially identical shell elements, one for the closure lid, and the other for the body of the device.

16. An article according to claim 14 or claim 15, **characterized by** the fact that the axial dimension (h) of the hollow body (11) is not less than 2.5 cm, and its maximum diameter (D), measured at its base, is not greater than 2.5 cm.

17. An article according to claim 1 to 13, **characterized by** the fact that the hollow body (21) constitutes a shell element for a receptacle closure capsule (20).

18. An article according to claim on of claim 1 to 13, **characterized by** the fact that the hollow body (31) constitutes a wall of a receptacle or a shell element of a receptacle.

19. An article according to any preceding claim, **characterized by** the fact that the backing is constituted by a foam layer (6) having closed cells.

20. An article according to any preceding claim, **characterized by** the fact that the backing is constituted by a foam layer (6) made of a polyolefine, in particular of polyethylene of density greater than 50 kg/m².

21. An article according to claim 1, **characterized by** the fact that a face of the backing opposed to a face covered with the stretchable is covered with covering at least a layer (40) made of a thermoformable material.

22. An article according to claim 21, **characterized by** the fact that said thermoformable material is a polyolefine.

23. An article according to claim 22, **characterized by** the fact that said thermoformable material is polyethylene.

24. An article according to one of claims 21 to 23, **characterized by** the fact that the layer (40) made of a thermoformable material covers at least partially a section (6a) of the backing (6).

25. A device for packaging and dispensing a product for the lips, said device including at least one shell element constituted by a hollow body as defined in any one of claims 1 to 24.

26. A method of manufacturing an article, said method being **characterized by** the fact that it comprises:
- deforming, in particular hot-deforming, a composite material plate (6, 7; 6, 7, 40) comprising a backing, in particular a foam layer (6) lined with a stretchable covering (7) stuck to the backing, in such a manner as to obtain a hollow body having an axial dimension (h) that is not less than the maximum transverse dimension (D).

27. A method according to claim 26, **characterized by** the fact that the axial dimension (h) is strictly greater than the maximum transverse dimension (D).

28. A method according to claim 26 or claim 27, **characterized by** the fact that it comprises inserting the base of the hollow body in a mask.

29. A method according to any on of claims 26 to 28, **characterized by** the fact that it comprises selecting the covering in such a manner as to obtain a stripy appearance (14) on the body after the backing has been deformed, said appearance being a result of the covering being stretched during transformation of the composite material.

30. A method according to any one of claims 26 to 29, **characterized by** the fact that deformation of the backing is accompanied by compression of said backing.

## Patentansprüche

1. Artikel (1), umfassend einen warm- oder kaltverformten Hohlkörper (11; 21; 31; 41; 51), der aus einem Verbund hergestellt ist, der einen warm- oder kaltverformbaren Träger (6) umfasst, **dadurch gekennzeichnet, dass** dieser Träger mit einer dehnbaren Verkleidung (7) verkleidet ist, die ein Gewebe, ein Gestrick oder einen Filz umfasst, das bzw. der an dem Träger befestigt, insbesondere verklebt ist, wobei der Körper (11; 21; 31) eine Höhe (h) aufweist, die größer als oder gleich seiner größten Querabmessung (D) ist.

2. Artikel nach Anspruch 1, **dadurch gekennzeichnet, dass** der Träger warmgeformt ist.

3. Artikel nach Anspruch 1 oder 2, **dadurch gekennzeichnet, dass** der Träger eine Schaumschicht (6) im Kontakt mit der Verkleidung (7) umfasst.

4. Artikel nach einem der vorhergehenden Ansprüche, **dadurch gekennzeichnet, dass** die Höhe (h) strikt größer als die größte Querabmessung (D) ist.

5. Artikel nach Anspruch 4, **dadurch gekennzeichnet, dass** das Gewebe aus Lycra® besteht.

6. Artikel nach einem der Ansprüche 4 und 5, **dadurch gekennzeichnet, dass** das Gewebe einfarbig ist.

7. Artikel nach einem der Ansprüche 4 und 5, **dadurch gekennzeichnet, dass** das Gewebe Fäden mit verschiedenen Farben umfasst.

8. Artikel nach einem der vorhergehenden Ansprüche, **dadurch gekennzeichnet, dass** der Hohlkörper (11) in eine Abdeckung eingesteckt ist.

9. Artikel nach Anspruch 8, **dadurch gekennzeichnet, dass** die Abdeckung aus einem Ring (9) oder aus dem abgewinkelten Rand (15; 23; 35; 36) eines teilweise in den Hohlkörper eingeführten Teils besteht.

10. Artikel nach dem vorhergehenden Anspruch, **dadurch gekennzeichnet, dass** ein Einsatz (10; 16; 24) sich im Inneren des Hohlkörpers erstreckt.

11. Artikel nach einem der vorhergehenden Ansprüche, **dadurch gekennzeichnet, dass** der Hohlkörper (11; 21; 41) mit einer Verschlusskappe (12; 18; 25; 42) versehen ist.

12. Artikel nach den Ansprüchen 10 und 11, **dadurch gekennzeichnet, dass** die Verschlusskappe (12; 18; 25) an einem im Inneren des Hohlkörpers gelegenen Ende des Einsatzes (10; 16; 24) befestigt ist.

13. Artikel nach dem vorhergehenden Anspruch, **dadurch gekennzeichnet, dass** die Verschlusskappe (12) in der Lage ist, mit einer Öffnung (13) eines Abgabemechanismus zusammenzuwirken.

14. Artikel nach einem der vorhergehenden Ansprüche, **dadurch gekennzeichnet, dass** der Hohlkörper (11) ein Gehäuseelement einer Vorrichtung zur Verpackung und Abgabe eines Produkts für die Lippen bildet.

15. Artikel nach Anspruch 14, **dadurch gekennzeichnet, dass** er zwei im wesentlichen identische Gehäuseelemente umfasst, eines für die Verschlusskappe und das andere für den Körper der Vorrichtung.

16. Artikel nach Anspruch 14 oder 15, **dadurch gekennzeichnet, dass** die Höhe (h) des Hohlkörpers (11) größer als oder gleich 2,5 cm und sein größter Durchmesser (D), an seiner Basis gemessen, kleiner als oder gleich 2,5 cm ist.

17. Artikel nach einem der Ansprüche 1 bis 13, **dadurch gekennzeichnet, dass** der Hohlkörper (21) ein Gehäuseelement für eine Verschlusskapsel (20) eines Behälters bildet.

18. Artikel nach einem der Ansprüche 1 bis 13, **dadurch gekennzeichnet, dass** der Hohlkörper (31) eine Wand eines Behälters oder eines Gehäuseelements eines Behälters bildet.

19. Artikel nach einem der vorhergehenden Ansprüche, **dadurch gekennzeichnet, dass** der Träger eine Schaumschicht (6) mit geschlossenen Zellen umfasst.

20. Artikel nach einem der vorhergehenden Ansprüche, **dadurch gekennzeichnet, dass** der Träger eine Schaumschicht (6) umfasst, die aus einem Polyolefin, insbesondere Polyethylen mit einer Dichte über 50 kg/m², hergestellt ist.

21. Artikel nach einem der vorhergehenden Ansprüche, **dadurch gekennzeichnet, dass** der Träger auf der der Verkleidung entgegengesetzten Seite mit mindestens einer Schicht (40) aus einem warmformbaren Werkstoff bedeckt ist.

22. Artikel nach Anspruch 21, **dadurch gekennzeichnet, dass** der warmformbare Werkstoff ein Polyolefin ist.

23. Artikel nach Anspruch 22, **dadurch gekennzeichnet, dass** der warmformbare Werkstoff Polyethylen ist.

24. Artikel nach einem der Ansprüche 21 bis 23, **dadurch gekennzeichnet, dass** die Schicht (40) aus warmformbarem Werkstoff eine Kante (6a) des Trägers (6) mindestens teilweise bedeckt.

25. Vorrichtung zum Verpacken und Abgeben mindestens eines Produkts für die Lippen, **dadurch gekennzeichnet, dass** sie mindestens einen Hohlkörper umfasst, wie er in einem der Ansprüche 1 bis 24 definiert ist.

26. Verfahren zur Herstellung eines Artikels, **dadurch gekennzeichnet, dass** es den Schritt der insbesondere warmen Verformung einer Platte aus einem Verbund (6, 7; 6, 7, 40) umfasst, der einen Träger, insbesondere eine Schaumschicht (6) umfasst, die mit einer dehnbaren Verkleidung (7) verkleidet ist, die ein Gewebe, ein Gestrick oder einen Filz umfasst, das bzw. der an dem Träger haftet, so dass man einen Hohlkörper erhält, dessen Höhe (h) größer als oder gleich der größten Querabmessung (D) ist.

27. Verfahren nach Anspruch 26, **dadurch gekennzeichnet, dass** die Höhe (h) strikt größer als die größte Querabmessung (D) ist.

28. Verfahren nach Anspruch 26 oder 27, **dadurch gekennzeichnet, dass** es den Schritt umfasst, der darin besteht, dass die Basis des Hohlkörpers in eine Abdeckung eingesetzt wird.

29. Verfahren nach einem der Ansprüche 26 bis 28, **dadurch gekennzeichnet, dass** es den Schritt umfasst, der darin besteht, dass die Verkleidung so gewählt wird, dass man auf dem Körper nach Verformung einen ästhetischen Effekt auf der Basis von Rillen (14) erhält, und zwar in Anbetracht der Ausdehnung der Verkleidung bei der Verformung des Verbunds.

30. Verfahren nach einem der Ansprüche 26 bis 29, **dadurch gekennzeichnet, dass** die Verformung des Trägers von dessen Komprimierung begleitet ist.
